# EUROPEAN PATENT SPECIFICATION

(11) **EP 3 647 988 B1**
(45) Date of publication and mention of the grant of the patent: **07.07.2021**
(21) Application number: 19173933.3
(22) Date of filing: 10.05.2019
(51) Int. Cl.: G06K 7/10

(54) **CARD DETECTION FOR A NFC (NEAR FIELD COMMUNICATION) READER SYSTEM**
KARTENDETEKTION FÜR EIN NFC (NAHFELDKOMMUNIKATION)-LESESYSTEM
DÉTECTION DE CARTE POUR UN SYSTÈME DE LECTEUR DE COMMUNICATION EN CHAMP PROCHE (NFC)

(30) Priority: 31.10.2018 US 201816177290
(43) Date of publication of application: 06.05.2020
(73) Proprietor: NXP B.V., 5656 AG Eindhoven (NL)
(72) Inventor: HUEBER, Gernot, 5656 AG Eindhoven (NL); MACNAMARA, Ian Thomas, 5656 AG Eindhoven (NL)
(74) Representative: Krott, Michel

(56) References cited:
- EP-A1- 2 602 942
- EP-A2- 2 763 075
- US-A1- 2010 019 885

## Description

### FIELD

The described embodiments relate generally to devices that communicate via inductive coupling and related methods, and more particularly to devices that communicate via inductive coupling to detect an external tag (or card) device and related methods.

### BACKGROUND

A NFC (Near Field Communication) enabled device is an example of a communications device that communicates via inductive coupling. NFC is a short-range wireless technology that allows communication between NFC enabled objects over a distance of less than 10cm. NFC is based on Radio Frequency Identification (RFID) standards. It is a technology that is designed to make an easier and more convenient world for us, enhancing the way we make transactions, exchange content and connect devices. The NFC tags one might see or create include contacts, URLs, map locations, text and much more.

For RF (radio frequency) reader/tag systems (such as a NFC/RFID (near field communication/radio frequency identification) reader system described above), it is an important feature for a reader device to be able to detect a target device (e.g., tag device) within communication distance.

Therefore, there are strong motivations to provide enhanced methods and devices for detecting an external tag (or card) device.

EP 2 763 075 A2 describes a radio-frequency identification (RFID) reader. The RFID reader includes a transmitter/receiver module configured to transmit a radio signal at a plurality of different power levels, and a control module coupled to the transmitter/receiver module and configured to control the power level at which the radio signal is transmitted based on a number of RFID tags detected when transmitting the radio signal at an initial power level.

EP 2 602 942 A1 describes a near field communications (NFC) device that detects a presence of another NFC capable device within its magnetic field. The NFC device observes signal metrics of an observed detection signal at various intervals. The NFC device determines a statistical relationship based upon at least two first signal metrics from among the signal metrics to determine an estimate of at least one second signal metric from among the signal metrics. The NFC device compares a difference between the estimate of the signal metric of the at least one second signal metric and the at least one second signal metric. The NFC capable device makes a first determination that another NFC device is present within its magnetic field when the difference indicates that the at least one second signal metric is non-linearly related to the at least two first signal metrics.

### SUMMARY

This specification discloses methods and devices for NFC/RFID (near field communication/radio frequency identification) reader systems to detect an external target device (e.g., tag or card device) within communication distance. In some embodiments, this is achieved by: (i) directing a Tx (transmitter) unit to generate a Tx signal, (ii) sweeping through a first Tx output (e.g., Tx voltage) in an increasing manner, and then (iii) monitoring a second Tx output (e.g., Tx current). During monitoring, a step change in the second Tx output (e.g., Tx current) would indicate detection of an external target device.

The present invention provides for a method for operating a device that communicates via inductive coupling to detect an external tag device, as defined in claim 1. Furthermore, the present invention provides for a computer program product, as defined in claim 10. Furthermore, the present invention provides for a device for detecting an external tag device in communications with the device via inductive coupling, as defined in claim 11. Advantageous embodiments of the invention are defined in the dependent claims.

The above summary is not intended to represent every example embodiment within the scope of the current or future Claim sets. Additional example embodiments are discussed within the Figures and Detailed Description below. Other aspects and advantages of embodiments of the present invention will become apparent from the following detailed description taken in conjunction with the accompanying drawings.

### BRIEF DESCRIPTION OF THE DRAWINGS

Fig. 1 shows a functional block diagram of a reader device and a card (tag) device in accordance with some embodiments of the invention.
Fig. 2 shows that the energy distance is strongly dependent on reader and tag device design and consequently differs for different device types.
Fig. 3 shows the simulation results of field-strength vs distance for different Tx (transmitter) output power levels generated.
Fig. 4 shows a functional block diagram of a detection system for controlling a Tx (transmitter) unit to sweep through a first output (e.g., Tx voltage) of the transmitted signal and also to monitor a second output (e.g., Tx current) of the transmitted signal in accordance with some embodiments of the invention.
Fig. 5 shows the impact of a Tx voltage sweep (i.e., Tx voltage increase over time) on a target device current (and consequently the abrupt target device current increase due to detection of the target device) in accordance with some embodiments of the invention.
Fig. 6 shows the impact of a Tx voltage sweep (i.e., Tx voltage increase over time) on the target device current and in turn on the Tx impedance as seen by the reader in accordance with some embodiments of the invention.
Fig. 7 shows the impact of a Tx voltage sweep (i.e., Tx voltage increase over time) on the target device current and in turn on the Tx current in accordance with some embodiments of the invention.
Fig. 8A shows a first example waveform ("a linear slope") that can be used to sweep through the first output (e.g., Tx voltage) of the transmitted signal in accordance with some embodiments of the invention.
Fig. 8B shows a second example waveform ("a nonlinear slope") that can be used to sweep through the first output (e.g., Tx voltage) of the transmitted signal in accordance with some embodiments of the invention.
Fig. 8C shows a third example waveform ("a staircase") that can be used to sweep through the first output (e.g., Tx voltage) of the transmitted signal in accordance with some embodiments of the invention.
Fig. 8D shows a fourth example waveform ("a pulse mode with increasing pulse heights") that can be used to sweep through the first output (e.g., Tx voltage) of the transmitted signal in accordance with some embodiments of the invention.
Fig. 8E shows a fifth example waveform ("a pulse mode with increasing pulse heights plus a linear slope for the pulse peak") that can be used to sweep through the first output (e.g., Tx voltage) of the transmitted signal in accordance with some embodiments of the invention.
Fig. 9 shows a process flow diagram of a method for operating a device that communicates via inductive coupling to detect an external tag device in accordance with some embodiments of the invention.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

For NFC/RFID (near field communication/radio frequency identification) reader systems, it is a fundamental and crucial feature to be able to detect a target device (e.g., tag device) in communication distance.

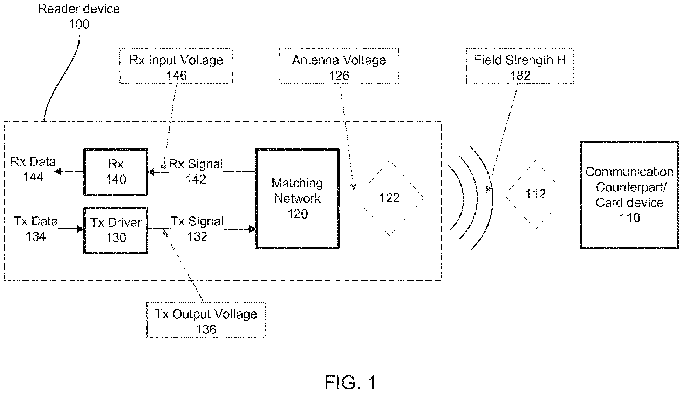

An ideal perfect system can identify a target device when in reach and start a communication, while, if the target device is outside reach due to the distance being too far, the communication is abandoned. The challenge is each reader and target (and their combination in a communication) may show individual distance requirements, due to coupling conditions of antenna (geometry), positions (in three-dimensional or x/y/z space), antenna coupling, the matching network, power transfer, etc. The methods and devices described in this specification are targeting to identify exactly at which point the target device is able to respond. Card-detection or tag-detection is an important feature of NFC/RFID reader systems with the purpose of identifying a target device within communication distance. Fig. 1 shows an example communication scenario with the reader device 100 transmitting the field and a target (e.g., card/tag device) device 110 receiving the field.

In particular, Fig. 1 shows a functional block diagram of a reader device 100 and a card (tag) device in accordance with some embodiments of the invention. In Fig. 1, the reader device 100 is shown to include a Tx (transmitter) driver 130, a Rx (receiver) 140, a matching network 120, and an antenna 122. In general, a reader device can include a Tx (transmitter) unit (which can further include a Tx driver, Tx supply, etc.), a Rx (receiver) unit, a matching network, and an antenna. Fig. 1 shows that the Tx driver 130 receives Tx data 134 as input, and then transmits Tx signal 132 as output. Fig. 1 also shows that the Rx 140 receives Rx data 142 as input, and then transmits Rx data 144 as output.

Fig. 1 also shows a communication counterpart card (target) device 110 together with an antenna 112. In some embodiments, the counterpart card (target) device 110 can be one of the following: (i) a passive tag, (ii) a card device, (iii) a headset, (iv) a speaker (e.g., a Bluetooth speaker).

Fig. 1 further depicts some relevant signals, voltages, power at the respective nodes. In particular, Fig. 1 shows Tx output voltage 136, antenna voltage 126, radiated Tx power (shown as field strength H 182), and Rx input voltage 146. Please note that the Tx transmitted power (in the form of radiated Tx power) can be quantified as field-strength H with the unit A/m.

The communication mechanism of the reader/tag system shown in Fig. 1 is as follows: the reader 100 (continuously) transmits a field and the target device 110, if in reach and being sufficiently powered by the field, is responding by load-modulation. Load modulation means that, while the reader continuous to transmit the carrier, the target changes the load on the field, by changing the impedance.

As typically target devices (e.g., tags) are passive, the power for operation is being harvested from the reader's CW (continuous wave). In turn, the tag operation is gated by sufficient power transferred from the reader.

Note that the power transfer does depend on distance (in three-dimensional or x/y/z space), antennas geometry and coupling, the matching network design, the power demand of the tag's processing, process variation, etc.

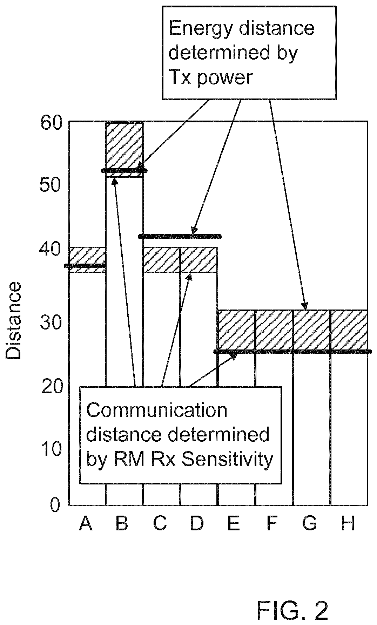

The most dominant factor for being able to communicate between a reader and tag device is power transfer in the direction from reader to tag, and also reader Rx sensitivity in the opposite direction. However, the power transfer is the basis for the response communication path. Fig. 2 shows that the energy distance is strongly dependent on reader and tag device design and consequently differs for different device types. In particular, Fig. 2 shows the energy distance and communication distance for a number of use case examples labelled A, B, C, D, E, F, G, and H. The distance is measured between a target (e.g., tag) device and a reader device. An energy distance for a reader device is typically determined by a Tx (transmitter) power, while a communication distance is typically determined by a RM (reader-mode) Rx (receiver) sensitivity.

As an example, for use case example B, the energy distance is 52 units, while the communication distance is 51 units. This means that for the distance below the communication distance of 51 units (which is shown as a solid white fill), the communication is passing. Then for the distance above the communication distance of 51 units (which is shown with a diagonal hatch pattern), this is a zone of partly failing communication.

As another example, for use case example D, the energy distance is 42 units, while the communication distance is 37 units. This means that for the distance below the communication distance of 37 units (which is shown as a solid white fill), the communication is passing. Then for the distance above the communication distance of 37 units (which is shown with a diagonal hatch pattern), this is a zone of partly failing communication. Then for the distance above the "zone of partly failing communication" (i.e., above the "diagonal hatch pattern" zone), there is full communication fail.

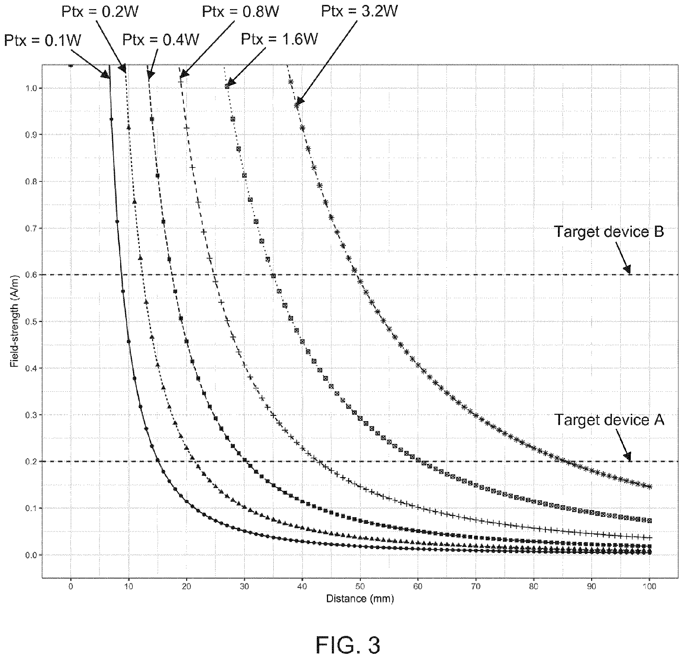

These two examples show that the energy distance and communication distance are strongly dependent on reader and tag device design, and consequently differ for different device types. Fig. 3 shows the simulation results of field-strength vs distance for different Tx (transmitter) output power levels generated. As can be seen, the field-strength decreases with distance.

Furthermore, two field-strength levels, horizontal lines at 0.2 and 0.6 A/m, are highlighted, which are the minimum field-strength needed for target (e.g., tag) device A and target (e.g., tag) B, respectively. Consequently, the target device B will work for a transmitter power (Ptx) = 0.1W only up to 8mm, for a transmitter power (Ptx) = 0.8W up to 24mm, for a transmitter power (Ptx) = 3.2W up to 49mm. The equivalent is true for the target device A with the specific higher distances as shown in Fig. 3.

As the distance and operation state of the target (e.g., tag) device can be unknown, the maximum output power for test and communication has to be picked (which is according to this example 3.2W). However, the choice of maximum output power (i.e., 3.2W) might be a total overkill and waste of energy for a target device A at a distance of, for example, 20mm, which would easily operate at 0.2W. This is a power saving of 3.0W, which is a power saving factor of >90% !

Fig. 3 shows that choosing a maximum output power to detect a target device can be a waste of energy, and is therefore not an optimum approach (at least from an energy saving point of view) for detecting a target device.

Therefore, in some embodiments, this invention is to detect the presence of a tag, and also the minimum power level at which the tag becomes active. With that knowledge, the power level can be adjusted to what is needed to operate the tag rather than to transmit the maximum possible. This approach even works at far distance when measuring of detuning is hardly possible.

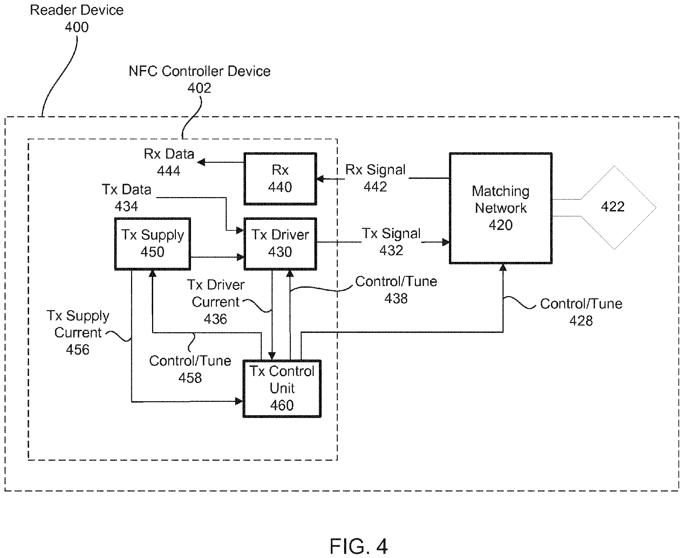

Fig. 4 shows a functional block diagram of a detection system for controlling a Tx (transmitter) unit to sweep through a first output (e.g., Tx voltage) of the transmitted signal and also to monitor a second output (e.g., Tx current) of the transmitted signal in accordance with some embodiments of the invention. In particular, Fig. 4 shows a functional block diagram of a detection system with antenna, matching network, receive (Rx) and transmit (Tx) path.

Fig. 4 provides details on how a reader device can use a detection system for controlling a Tx (transmitter) unit to sweep through a first output (e.g., Tx voltage) of the transmitted signal and also to monitor a second output (e.g., Tx current) of the transmitted signal. In Fig. 4, there is a functional block diagram of a reader device 400 with a Tx (transmitter) control unit 460 that controls the Tx output by controlling/tuning the tunable elements (i.e., Tx supply 450, Tx driver 430, matching network 420) in accordance with some embodiments of the invention. The Tx (transmitter) control unit 460 controls/tunes the Tx supply 450 (using control/tune 458), the Tx driver 430 (using control/tune 438), and the matching network 420 (using control/tune 428).

In Fig. 4, a reader device 400 is shown to include a NFC controller device 402, a matching network 420, and an antenna 422. The NFC controller device 402 is shown to include a Tx (transmitter) driver 430, a Tx supply 450, a Rx (receiver) 440, and a Tx controller unit 460. In Fig. 4, the Tx supply 450 provides an input to the Tx driver 430. Fig. 4 shows that the Tx driver 430 receives Tx data 434 as input, and then transmits Tx signal 432 as output to the matching network 420 and the antenna 422. Fig. 4 also shows that the Rx 440 receives Rx data 442 as input from the matching network 420 and the antenna 422, and in turn transmits Rx data 444 as output.

Fig. 4 shows that the Tx control unit 460 is configured for controlling the Tx (transmitter) unit. Fig. 4 shows that the Tx control unit 460 is further configured for detecting the external tag device by: (a) directing the Tx (transmitter) unit to generate a transmitted signal 432, (b) directing the Tx (transmitter) unit to sweep through a first output (e.g., Tx voltage) of the transmitted signal 432, (c) monitoring a second output (e.g., Tx current) of the transmitted signal, and (d) detecting the external tag device when there is a step change in the second output (e.g., Tx current) of the transmitted signal. Fig. 4 shows that the Tx control unit 460 can sense a Tx driver current through connection 436 and a Tx supply current through connection 456. Therefore, in some embodiments, the Tx (transmitter) control unit 460 of the device can monitor the second output (e.g., Tx current) of the transmitted signal based on sensing a Tx driver current through connection 436 and a Tx supply current through connection 456. It is not shown in Fig. 4, but in some embodiments, the Tx (transmitter) control unit 460 of the device can also monitor the second output (e.g., Tx current) of the transmitted signal based on sensing the Rx (receiver) unit 440.

As described above, one pivotal block here is the Tx (transmitter) control unit 460, which can be implemented in HW (hardware) and/or SW (software) to control the Tx output signal (and power), all configuration of the related blocks (driver, LDO or low-dropout regulator, etc.), and timing.

In some embodiment, the function and procedure of testing can be the following:
a. Enable the Tx driver to emit a field with a specific field-strength.
b. Start monitoring the power emitted by the DUT (e.g., known Tx voltage and measured Tx current). (Note that DUT denotes a device under test.)
c. Change the Tx driver emitted power (e.g., increase the Tx voltage) in a (small) step.
d. Monitor the emitted power again and compare with the previous measured data samples.
e. Note that, at some (increased) Tx power level transmitted from the reader device, the target device (e.g., the tag) will harvest sufficient energy from the field to be able to start-up. Consequently, the target device's impact on the system will be to change from a fully inactive and passive mode to an active state, where energy is drawn.
f. The energy consumed by the target device (e.g., the tag) will show up as an impedance change on the target device side. Furthermore, considering the "law of energy conservation", the reader device needs to supply the additional energy drawn by the target device.
g. The change of power state for the target device (e.g., the tag) will show up as change in the Tx power emitted by the reader device which is to be detected.
h. Consequently, the Tx power level at which the target device (e.g., the tag) is getting active can be accurately detected.

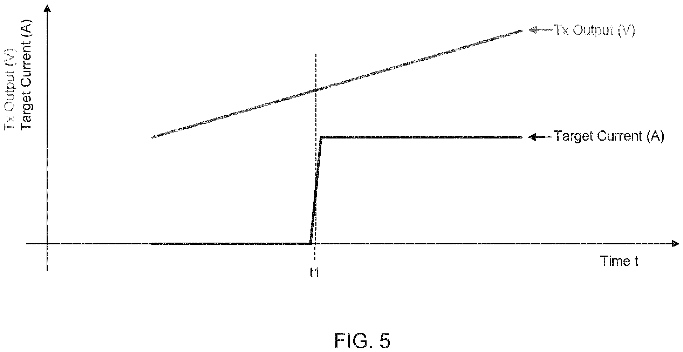

Fig. 5 shows an illustrative plot of the Tx voltage increase over time (and consequently the emitted Tx power increase due to detection of a target device) in accordance with some embodiments of the invention. In other words, Fig. 5 is showing the impact of a Tx voltage sweep (i.e., Tx voltage increase over time) on a target device current (and consequently the abrupt target device current increase due to detection of the target device). Note that, in an implementation, the Tx voltage is forced by the respective configurations of the driver supply.

At time t1, the target device (e.g., the tag) will harvest sufficient energy from the received field at the target device. Having sufficient energy, the tag processing units (analog and digital) will start-up and draw energy/current from the harvester, which in turn extracts the energy from the field.

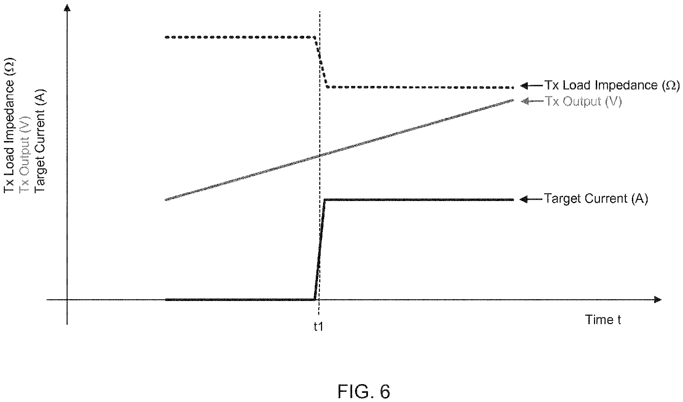

Fig. 6 shows an illustrative plot of the Tx impedance change seen by the Tx driver over time (which corresponds to the Tx voltage increase over time shown in Fig. 5) in accordance with some embodiments of the invention. In other word, Fig. 6 is showing the impact of a Tx voltage sweep (i.e., Tx voltage increase over time) on the target device current and in turn on the Tx impedance as seen by the reader.

Initially, up to a specific Tx voltage (and consequently Tx power), the target device (e.g., the tag) is inactive and there is no impact on the communication channel (matching networks, antenna, air channel, etc.). Hence, the impedance seen by the Tx driver is constant.

At time t1, when the target device (e.g., the tag) is starting up, drawing energy from the harvester, the harvester (e.g., a rectifier) loads the communication path (assuming the communication path as a mutual inductance, which is loaded by the active rectifier diode). In the target device (e.g., the tag) inactive case, the rectifier is in a not-conducting switched-off condition, and behaving as a passive part of the circuit.

As soon as the harvester is above the diode voltage levels and the target device (e.g., the tag) becomes active, there is a significant loading that impacts the mutual inductance. Hence, the power out of the Tx will change.

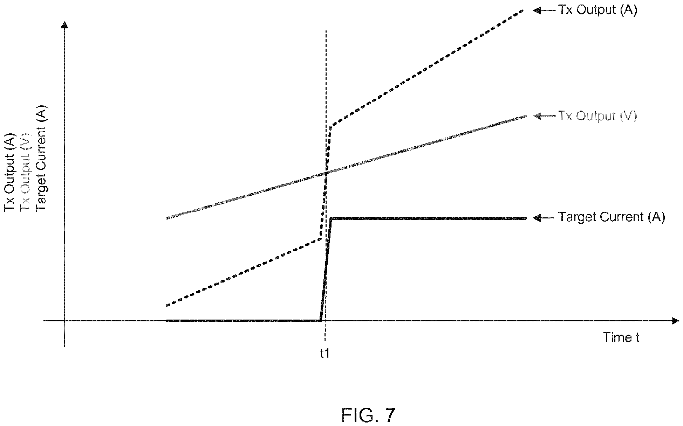

Fig. 7 shows an illustrative plot of the Tx current increase over time (due to the current consumption in the target device) in accordance with some embodiments of the invention. In other words, Fig. 7 is showing the impact of a Tx voltage sweep (i.e., Tx voltage increase over time) on the target device current and in turn on the Tx current.

Without the presence of an active target device, the Tx current increase over time is proportionally to the Tx voltage increase. Therefore, initially, up to a specific Tx voltage (and consequently Tx power), the Tx current is increasing over time (in a manner proportionally to the Tx voltage increase), because the target device (e.g., the tag) is inactive and there is no impact on the communication channel (matching networks, antenna, air channel, etc.).

At time t1, when the target device (e.g., the tag) is starting up, drawing energy from the harvester, a huge step increase in the Tx current is seen. Then, as the target device (e.g., the tag) becomes fully active, the current consumption becomes relatively constant, so a steady increase of the Tx current is seen after this initial huge step increase at time t1.

Both Figs. 6 and 7 show that a huge step increase (or huge abrupt increase) in the Tx impedance or Tx current can indicate the detection of an external target device (e.g., an external tag). Furthermore, by measuring the Tx power level when the external target device (e.g., the external tag) becomes active, one is able to determine the minimum power needed for communication between the reader device and the external tag device.

Both Figs. 6 and 7 also show that (in some embodiments) the Tx voltage sweep needs to be increasing in order for the external tag device to become active and produce a step change in the Tx current or the Tx impedance. It is not shown in the figures, but obvious that, in some embodiments, the Tx voltage sweep can also be decreasing in order for the external tag device to become inactive and produce an opposite step change in the Tx current or the Tx impedance. However, the increasing Tx voltage sweep can be preferred, because the objective of the tag (card) detection is to search for the presence of the tag (card), so it should start with the tag (card) being inactive. Moreover, the increasing Tx voltage sweep starts at a lower power, so it can be more power saving. For the decreasing Tx voltage sweep, there is also the problem of how high should the starting power be. If the default starting power is set to be the maximum output power, then Fig. 3 has already shown that choosing a maximum output power to detect a target device can be a waste of energy, and is therefore not an optimum approach (at least from an energy saving point of view).

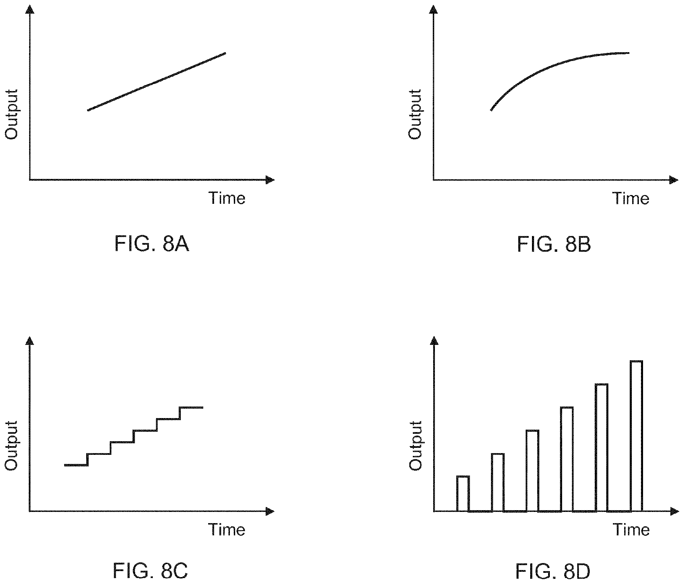

If an increasing Tx voltage sweep (or, in general, an increasing Tx output sweep) is the preferred embodiment, then what are some possible increasing Tx voltage (or output) sweep patterns (or waveforms) that can be used. In that regard, Figs. 8A-8E show different example waveforms that can be used to sweep through the first output (e.g., Tx voltage) of the transmitted signal in accordance with some embodiments of the invention.

Fig. 8A shows a first example waveform - "a linear slope". This is also the waveform that was used in Figs. 5-7 for sweeping through the first output (e.g., Tx voltage) of the transmitted signal. But other waveforms can also be used for sweeping through the first output (e.g., Tx voltage) of the transmitted signal. Some of these waveform examples are shown in Figs. 8B-8E. In some embodiments, "a linear slope" can be the preferred choice if there are no hardware limitation, since it can be the simplest (and most obvious) waveform to implement.

Fig. 8B shows a second example waveform - "a nonlinear slope". Fig. 8B shows a "a nonlinear convex slope", but, in some embodiments, an example waveform can be "a nonlinear concave slope". In some embodiments, an example waveform can also be "a complex nonlinear slope".

Fig. 8C shows a third example waveform - "a staircase". In some embodiments, "a staircase" can be the preferred choice due to hardware limitation.

Fig. 8D shows a fourth example waveform - "a pulse mode with increasing pulse heights".

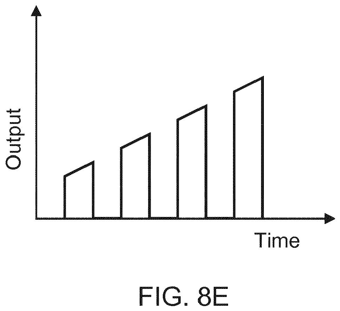

Fig. 8E shows a fifth example waveform - "a pulse mode with increasing pulse heights plus a linear slope for the pulse peak".

Again, the common theme for all these example waveforms is that they are all increasing in Tx output. However, the examples from Figs. 8D and 8E do show some drop-offs in the Tx output. For these examples, as long as the drop-off time period is very short (so that the reader tag system cannot respond to the drop-off), then, for all practical purposes, this is still an increasing Tx output.

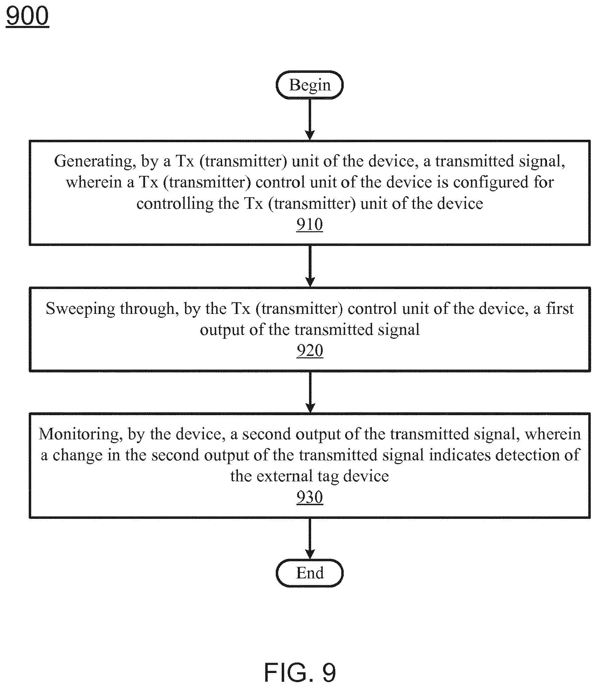

Fig. 9 shows a process flow diagram of a method for operating a device that communicates via inductive coupling to detect an external tag device in accordance with some embodiments of the invention. As shown in Fig. 9, the method 900 begins at step 910, where the method generates, by a Tx (transmitter) unit of the device, a transmitted signal, wherein a Tx (transmitter) control unit of the device is configured for controlling the Tx (transmitter) unit of the device. Then, the method proceeds to step 920. In step 920, the method sweeps through, by the Tx (transmitter) control unit of the device, a first output of the transmitted signal. Finally, at step 930, the method monitors, by the device, a second output of the transmitted signal, wherein a change in the second output of the transmitted signal indicates detection of the external tag device.

The first output of the transmitted signal comprises one of the follow ing: (i) a voltage (i.e., Tx voltage) of the transmitted signal, (ii) a power (i.e., Tx power) of the transmitted signal, (iii) a current (i.e., Tx current) of the transmitted signal. In this specification, most of the examples provided show that the first output of the transmitted signal can be a voltage (i.e., Tx voltage) of the transmitted signal. This is because, in some embodiments, the preferred choice for the first output of the transmitted signal is Tx voltage. However, in some embodiments, the first output of the transmitted signal can also be a power (i.e., Tx power) of the transmitted signal, or a current (i.e., Tx current) of the transmitted signal.

The second output of the transmitted signal comprises one of the following: (i) a current (i.e., Tx current) of the transmitted signal, (ii) a voltage (i.e., Tx voltage) of the transmitted signal, (iii) a power (i.e., Tx power) of the transmitted signal, (iv) wherein the second output is not the same as the first output. In this specification, most of the examples provided show that the second output of the transmitted signal can be a current (i.e., Tx current) of the transmitted signal. This is because, in some embodiments, the preferred choice for the second output of the transmitted signal is Tx current. However, in some embodiments, the second output of the transmitted signal can also be a voltage (i.e., Tx voltage) of the transmitted signal, or a power (i.e., Tx power) of the transmitted signal, but with the obvious condition that the second output cannot be the same as the first output.

In some embodiments, the device (e.g., reader device) can be monitoring the second output of the transmitted signal. In some embodiments, the Tx (transmitter) control unit of the device can be monitoring the second output of the transmitted signal.

In some embodiments, the Tx (transmitter) control unit of the device can be monitoring the second output of the transmitted signal based on sensing by one or more of the following: (i) a Tx (transmitter) driver unit of the device, (ii) a Tx (transmitter) supply unit of the device, (iii) a Rx (receiver) unit of the device.

In some embodiments, the Tx (transmitter) control unit of the device can be monitoring the second output of the transmitted signal based on one or more of the following: (i) sensing a current of a Tx (transmitter) driver unit of the device, (ii) sensing a current of a Tx (transmitter) supply unit of the device, (iii) sensing a voltage of a Rx (receiver) unit of the device.

In one embodiment, the test sequence for the card-detection might be duty-cycled or a pulsed mode, which means that there is a short period where the system generates a field, sweeps through its field-strength, and checks for a card device to activate, while a portion of the total time, the system is in idle or standby for power saving. As a further example, in some embodiments, the step of sweeping through the first output of the transmitted signal can occur in a duty-cycled or a pulsed mode, wherein the step of sweeping through is only activated for a portion of a total time and the device is in idle for the remainder of the total time.

In one embodiment, this invention may be used to detect the effective current consumption of a card device circuits or its start up. This is because the step change in Tx (transmitter) power can be a measure of the effective current consumption of a card device circuits or its start up. Note that only a measure of the "effective" current consumption of a card device circuits or its start up is possible, because of air channel loss, etc. In some embodiments, the effective current consumption of a card device circuits can be different during "steady state operation" or during "start up", meaning different power consumptions for the two operating modes.

In one embodiment, the sweep (or change) of the Tx power will be fast such that the impact of changing detuning (i.e., by moving or changing the distance) does not impact the measurement (accuracy). Moreover, the detection criterion is a "step" in the measured power, rather than a continuous increase/decrease caused by changing detuning. As a further example, in some embodiments, sweeping through the first output of the transmitted signal is fast enough such that impact of changing a distance between the device and the external tag device does not affect accuracy of determining the minimum power needed for communication between the device and the external tag device.

In this specification, example embodiments have been presented in terms of a selected set of details. However, a person of ordinary skill in the art would understand that many other example embodiments may be practiced which include a different selected set of these details. It is intended that the following claims cover all possible example embodiments.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner. It should also be noted that at least some of the operations for the methods may be implemented using software instructions stored on a computer useable storage medium for execution by a computer. As an example, an embodiment of a computer program product includes a computer useable storage medium to store a computer readable program that, when executed on a computer, causes the computer to perform operations, as described herein.

The computer-useable or computer-readable medium can be an electronic, magnetic, optical, electromagnetic, infrared, or semiconductor system (or apparatus or device), or a propagation medium. Examples of a computer-readable medium include a semiconductor or solid-state memory, magnetic tape, a removable computer diskette, a random access memory (RAM), a read-only memory (ROM), a rigid magnetic disc, and an optical disc. Examples of optical discs include a compact disc with read only memory (CD-ROM), a compact disc with read/write (CD-R/W), a digital video disc (DVD), and a Blu-ray disc.

The various aspects, embodiments, implementations or features of the described embodiments can be used separately or in any combination. Various aspects of the described embodiments can be implemented by software, hardware or a combination of hardware and software.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

## Claims

1. A method for operating a device (100, 400) that communicates via inductive coupling to detect an external tag (110), the method comprising:
- generating, by a Tx transmitter unit of the device (100, 400), a transmitted signal (432),
wherein a Tx transmitter control unit (460) of the device (100, 400) is configured for controlling the Tx transmitter unit of the device (100, 400);
- sweeping, by the Tx transmitter control unit (460) of the device (100, 400), a first output value of the transmitted signal (432) by increasing or decreasing the first output value of the transmitted signal (432) so that a step change in a second output value of the transmitted signal (432) is detectable, the step change being caused by the external tag (110) harvesting sufficient energy to enable the external tag (110) to start up; and
- monitoring, by the device (100, 400), the second output value of the transmitted signal (432),
detecting the external tag (110) when there is the step change in the second output value of the transmitted signal (432);
wherein the first output value of the transmitted signal (432) comprises one of the following:
- a voltage of the transmitted signal (432),
- a power of the transmitted signal (432),
- a current of the transmitted signal (432);
wherein the second output value of the transmitted signal (432) comprises one of the following:
- a current of the transmitted signal (432),
- a voltage of the transmitted signal (432),
- a power of the transmitted signal (432), and
wherein the second output value is not the same as the first output value.

2. The method of claim 1, further comprising:
- determining a minimum power needed for communication between the device (100, 400) and the external tag (110).

3. The method of any preceding claim, wherein sweeping the first output value of the transmitted signal (432) comprises using one or more of the following output waveforms:
- a linear slope,
- a nonlinear slope,
- a staircase,
- a pulse mode with increasing or decreasing pulse heights,
- any other waveform.

4. The method of any preceding claim, wherein monitoring, by the device (100, 400), the second output value of the transmitted signal (432), comprises:
- monitoring, by the Tx transmitter control unit (460) of the device (100, 400), the second output value of the transmitted signal (432).

5. The method of claim 4, wherein the Tx transmitter control unit (460) of the device (100, 400) monitors the second output value of the transmitted signal (432) based on sensing by one or more of the following:
- a Tx transmitter driver unit (430) of the device (100, 400),
- a Tx transmitter supply unit (450) of the device (100, 400),
- a Rx receiver unit (440) of the device (100, 400).

6. The method of claim 5, wherein the Tx transmitter control unit (460) of the device (100, 400) monitors the second output value of the transmitted signal (432) based on one or more of the following:
- sensing a current of the Tx transmitter driver unit (430) of the device (100, 400),
- sensing a current of the Tx transmitter supply unit (450) of the device (100, 400),
- sensing a voltage of the Rx receiver unit (440) of the device (100, 400).

7. The method of any preceding claim, wherein the external tag (110) is one of the following:
- a passive tag,
- a card device,
- a headset,
- a speaker.

8. The method of any preceding claim, wherein the step of sweeping the first output value of the transmitted signal (432) occurs in a duty-cycled or a pulsed mode, wherein the step of sweeping is only activated for a portion of a total time and the device (100, 400) is in idle for the remainder of the total time.

9. The method of claim 2, wherein the minimum power is used to determine an effective current and/or power consumption of the external tag (110), and/or wherein sweeping the first output value of the transmitted signal (432) is fast enough such that impact of changing a distance between the device (100, 400) and the external tag (110) does not affect accuracy of determining the minimum power needed for communication between the device (100, 400) and the external tag (110).

10. A computer program product comprising executable instructions encoded in a non-transitory computer readable medium which, when executed by the device (100, 400), carry out or control the method of any preceding claim.

11. A device (100, 400) for detecting an external tag (110) in communications with the device (100, 400) via inductive coupling, the device (100, 400) comprising:
- a matching network (420);
- an antenna (422);
- a Tx transmitter unit configured to generate a transmitted signal (432) that is transmitted through the matching network (420) and the antenna (422), the device (100, 400) comprising a Tx transmitter control unit (460),
wherein the Tx control unit (460) is configured for controlling the Tx transmitter unit,
wherein the Tx control unit (460) is further configured for detecting the external tag (110) by:
- directing the Tx transmitter unit to generate the transmitted signal (432),
- directing the Tx transmitter unit to sweep a first output value of the transmitted signal (432) by increasing or decreasing the first output value of the transmitted signal (432) so that a step change in a second output value of the transmitted signal (432) is detectable, the step change being caused by the external tag (110) harvesting sufficient energy to enable the external tag (110) to start up,
- monitoring the second output value of the transmitted signal (432), and
- detecting the external tag (110) when there is the step change in the second output value of the transmitted signal (432),
wherein the first output value of the transmitted signal (432) comprises one of the following:
- a voltage of the transmitted signal (432),
- a power of the transmitted signal (432),
- a current of the transmitted signal (432);
wherein the second output value of the transmitted signal (432) comprises one of the following:
- a current of the transmitted signal (432),
- a voltage of the transmitted signal (432),
- a power of the transmitted signal (432), and
wherein the second output value is not the same as the first output value.

## Patentansprüche

1. Verfahren zum Betreiben einer Vorrichtung (100, 400), die über induktive Kopplung kommuniziert, um ein externes Etikett (110) zu erkennen, wobei das Verfahren umfasst:
- Erzeugen eines übertragenen Signals (432) durch eine Tx-Sendereinheit der Vorrichtung (100, 400),
wobei eine Tx-Sendersteuereinheit (460) der Vorrichtung (100, 400) dazu ausgelegt ist, die Tx-Sendereinheit der Vorrichtung (100, 400) zu steuern;
- Abtasten eines ersten Ausgangswerts des übertragenen Signals (432) durch die Tx-Sendersteuereinheit (460) der Vorrichtung (100, 400) durch Erhöhen oder Verringern des ersten Ausgangswerts des übertragenen Signals (432), so dass eine stufenweise Änderung eines zweiten Ausgangswerts des übertragenen Signals (432) erkannt werden kann, wobei die stufenweise Änderung durch das externe Etikett (110) verursacht wird, das ausreichend Energie aufnimmt, um dem externen Etikett (110) ein Starten zu ermöglichen; und
- Überwachen des zweiten Ausgangswerts des übertragenen Signals (432) durch die Vorrichtung (100, 400),
- Erkennen des externen Etiketts (110), wenn sich der zweite Ausgangswert des übertragenen Signals (432) stufenweise ändert;
wobei der erste Ausgangswert des übertragenen Signals (432) umfasst:
- eine Spannung des übertragenen Signals (432), oder
- eine Leistung des übertragenen Signals (432), oder
- einen Strom des übertragenen Signals (432);
wobei der zweite Ausgangswert des übertragenen Signals (432) umfasst:
- einen Strom des übertragenen Signals (432), oder
- eine Spannung des übertragenen Signals (432), oder
- eine Leistung des übertragenen Signals (432), und wobei der zweite Ausgangswert nicht mit dem ersten Ausgangswert übereinstimmt.

2. Verfahren nach Anspruch 1, ferner umfassend:
- Bestimmen einer Mindestleistung, die für die Kommunikation zwischen der Vorrichtung (100, 400) und dem externen Etikett (110) erforderlich ist.

3. Verfahren nach einem der vorhergehenden Ansprüche, wobei das Abtasten des ersten Ausgangswerts des übertragenen Signals (432) die Verwendung einer oder mehrerer der folgenden Ausgangswellenformen umfasst:
- eine lineare Steigung,
- eine nichtlineare Steigung,
- eine Treppenform,
- einen Impulsmodus mit zunehmender oder abnehmender Impulshöhe,
- jede andere Wellenform.

4. Verfahren nach einem der vorhergehenden Ansprüche, wobei das Überwachen durch die Vorrichtung (100, 400) des zweiten Ausgangswerts des übertragenen Signals (432) umfasst:
-- Überwachen des zweiten Ausgangswerts des übertragenen Signals (432) durch die Tx-Sendersteuereinheit (460) des der Vorrichtung (100, 400).

5. Verfahren nach Anspruch 4, wobei die Tx-Sendersteuereinheit (460) der Vorrichtung (100 400) den zweiten Ausgangswert des übertragenen Signals (432) basierend auf dem Erfassen durch:
- eine Tx-Sendertreibereinheit (430) der Vorrichtung (100, 400), und/oder
- eine Tx-Senderversorgungseinheit (450) der Vorrichtung (100, 400), und/oder
- eine Rx-Empfängereinheit (440) der Vorrichtung (100, 400) überwacht.

6. Verfahren nach Anspruch 5, wobei die Tx-Sendersteuereinheit (460) der Vorrichtung (100, 400) den zweiten Ausgangswert des übertragenen Signals (432) basierend auf:
- dem Erfassen eines Stroms des Tx-Sendertreibereinheit (430) der Vorrichtung (100, 400), und/oder
- dem Erfassen eines Stroms der Tx-Senderversorgungseinheit (450) der Vorrichtung (100, 400), und/oder
- dem Erfassen einer Spannung der Rx-Empfangseinheit (440) der Vorrichtung (100, 400) überwacht.

7. Verfahren nach einem der vorhergehenden Ansprüche, wobei das externe Etikett (110) eines der folgenden ist:
- ein passives Etikett,
- eine Kartenvorrichtung,
- ein Headset,
- ein Lautsprecher.

8. Verfahren nach einem der vorhergehenden Ansprüche, wobei der Schritt des Abtastens des ersten Ausgangswerts des übertragenen Signals (432) in einem Tastverhältnis oder einem gepulsten Modus erfolgt, wobei der Schritt des Abtastens nur für einen Teil einer Gesamtzeit aktiviert ist und die Vorrichtung (100, 400) sich für den Rest der Gesamtzeit im Leerlauf befindet.

9. Verfahren nach Anspruch 2, wobei die Mindestleistung verwendet wird, um einen effektiven Strom- und/oder Leistungsverbrauch des externen Etiketts (110) zu bestimmen, und/oder wobei das Abtasten des ersten Ausgangswerts des übertragenen Signals (432) schnell genug ist, so dass die Auswirkung einer Änderung eines Abstands zwischen der Vorrichtung (100, 400) und dem externen Etikett (110) die Genauigkeit der Bestimmung der Mindestleistung, die für die Kommunikation zwischen der Vorrichtung (100, 400) und dem externen Etikett (110) benötigt wird, nicht beeinflusst.

10. Computerprogrammprodukt, das ausführbare Befehle umfasst, die in einem nichtflüchtigen computerlesbaren Medium codiert sind und die, wenn sie von der Vorrichtung (100, 400) ausgeführt werden, das Verfahren nach einem der vorhergehenden Ansprüche durchführen oder steuern

11. Vorrichtung (100, 400) zum Erkennen eines externen Etiketts (110), das über induktive Kopplung mit der Vorrichtung (100, 400) in Kommunikation steht, wobei die Vorrichtung (100, 400) umfasst:
- ein übereinstimmendes Netzwerk (420);
- eine Antenne (422);
- eine Tx-Sendereinheit, die dazu ausgelegt ist, ein übertragenes Signal (432) zu erzeugen, das über das übereinstimmende Netzwerk (420) und die Antenne (422) übertragen wird, wobei die Vorrichtung (100, 400) eine Tx-Sendersteuereinheit (460) umfasst,
wobei die Tx-Steuereinheit (460) dazu ausgelegt ist, die Tx-Sendereinheit zu steuern,
wobei die Tx-Steuereinheit (460) ferner dazu ausgelegt ist das externe Etikett (110) zu erkennen, durch:
- Anweisen der Tx-Sendereinheit, das übertragene Signal (432) zu erzeugen,
- Anweisen der Tx-Sendereinheit, einen ersten Ausgangswert des übertragenen Signals (432) durch Erhöhen oder Verringern des ersten Ausgangswerts des übertragenen Signals (432) abzutasten, so dass eine stufenweise Änderung eines zweiten Ausgangswerts des übertragenen Signals (432) erkannt werden kann, wobei die stufenweise Änderung durch das externe Etikett (110) verursacht wird, das ausreichend Energie aufnimmt, um dem externen Etikett (110) ein Starten zu ermöglichen,
- Überwachen des zweiten Ausgangswerts des übertragenen Signals (432), und
- Erkennen des externen Etiketts (110), wenn sich der zweite Ausgangswert des übertragenen Signals (432) stufenweise ändert,
wobei der erste Ausgangswert des übertragenen Signals (432) umfasst:
- eine Spannung des übertragenen Signals (432), oder
- eine Leistung des übertragenen Signals (432), oder
- einen Strom des übertragenen Signals (432);
wobei der zweite Ausgangswert des übertragenen Signals (432) umfasst:
- einen Strom des übertragenen Signals (432), oder
- eine Spannung des übertragenen Signals (432), oder
- eine Leistung des übertragenen Signals (432), und wobei der zweite Ausgangswert nicht mit dem ersten Ausgangswert übereinstimmt.

## Revendications

1. Procédé pour opérer un dispositif (100, 400) qui communique via un couplage inductif afin de détecter une étiquette externe (110), le procédé comprenant :
- la génération, par une unité d'émetteur Tx du dispositif (100, 400), d'un signal émis (432),
dans lequel une unité de commande d'émetteur Tx (460) du dispositif (100, 400) est configurée pour commander l'unité d'émetteur Tx du dispositif (100, 400) ;
- le balayage, par l'unité de commande d'émetteur Tx (460) du dispositif (100, 400), d'une première valeur de sortie du signal émis (432) grâce à l'augmentation ou la diminution de la première valeur de sortie du signal émis (432) de sorte qu'un changement d'échelon dans une deuxième valeur de sortie du signal émis (432) soit détectable, le changement d'échelon étant causé par le fait que l'étiquette externe (110) recueille suffisamment d'énergie pour permettre à l'étiquette externe (110) de démarrer ; et
- la surveillance, par le dispositif (100, 400), de la deuxième valeur de sortie du signal émis (432),
la détection de l'étiquette externe (110) au moment où survient le changement d'échelon dans la deuxième valeur de sortie du signal émis (432) ;
dans lequel la première valeur de sortie du signal émis (432) comprend l'un des éléments suivants :
- une tension du signal émis (432),
- une puissance du signal émis (432),
- un courant du signal émis (432) ;
dans lequel la deuxième valeur de sortie du signal émis (432) comprend l'un des éléments suivants :
- un courant du signal émis (432),
- une tension du signal émis (432),
- une puissance du signal émis (432), et
dans lequel la deuxième valeur de sortie n'est pas la même que la première valeur de sortie.

2. Procédé de la revendication 1, comprenant en outre :
- la détermination d'une puissance minimum requise pour une communication entre le dispositif (100, 400) et l'étiquette externe (110).

3. Procédé de n'importe quelle revendication précédente, dans lequel le balayage de la première valeur de sortie du signal émis (432) comprend l'utilisation d'une ou de plusieurs des formes d'onde de sortie suivantes :
- une pente linéaire,
- une pente non linéaire,
- un escalier,
- un mode d'impulsion avec des hauteurs d'impulsion croissantes ou décroissantes,
- n'importe quelle autre forme d'onde.

4. Procédé de n'importe quelle revendication précédente, dans lequel la surveillance, par le dispositif (100, 400), de la deuxième valeur de sortie du signal émis (432), comprend :
- la surveillance, par l'unité de commande d'émetteur Tx (460) du dispositif (100, 400), de la deuxième valeur de sortie du signal émis (432).

5. Procédé de la revendication 4, dans lequel l'unité de commande d'émetteur Tx (460) du dispositif (100, 400) surveille la deuxième valeur de sortie du signal émis (432) sur la base de la détection d'un ou plusieurs des éléments suivants :
- une unité d'attaque d'émetteur Tx (430) du dispositif (100, 400),
- une unité d'alimentation d'émetteur Tx (450) du dispositif (100, 400),
- une unité de récepteur Rx (440) du dispositif (100, 400) .

6. Procédé de la revendication 5, dans lequel l'unité de commande d'émetteur Tx (460) du dispositif (100, 400) surveille la deuxième valeur de sortie du signal émis (432) sur la base d'un ou plusieurs des éléments suivants :
- la détection d'un courant de l'unité d'attaque d'émetteur Tx (430) du dispositif (100, 400),
- la détection d'un courant de l'unité d'alimentation d'émetteur Tx (450) du dispositif (100, 400),
- la détection d'une tension de l'unité de récepteur Rx (440) du dispositif (100, 400).

7. Procédé de n'importe quelle revendication précédente, dans lequel l'étiquette externe (110) est l'un des éléments suivants :
- une étiquette passive,
- un dispositif de carte,
- un casque,
- un haut-parleur.

8. Procédé de n'importe quelle revendication précédente, dans lequel l'étape de balayage de la première valeur de sortie du signal émis (432) se produit dans un mode de cycle de service ou pulsé, dans lequel l'étape de balayage est uniquement activée pendant une portion d'un temps total et que le dispositif (100, 400) est en veille pendant le restant du temps total.

9. Procédé de la revendication 2, dans lequel la puissance minimum est utilisée pour déterminer une consommation effective de courant et/ou de puissance de l'étiquette externe (110), et/ou dans lequel le balayage de la première valeur de sortie du signal émis (432) est suffisamment rapide pour que l'impact d'un changement d'une distance entre le dispositif (100, 400) et l'étiquette externe (110) n'affecte pas la précision de la détermination de la puissance minimum requise pour une communication entre le dispositif (100, 400) et l'étiquette externe (110).

10. Produit de programme informatique comprenant des instructions exécutables codées dans un support non transitoire lisible par ordinateur qui, lorsqu'elles sont exécutées par le dispositif (100, 400), concrétisent ou commandent le procédé de n'importe quelle revendication précédente.

11. Dispositif (100, 400) pour détecter une étiquette externe (110) dans des communications avec le dispositif (100, 400) via un couplage inductif, le dispositif (100, 400) comprenant :
- un réseau d'adaptation (420) ;
- une antenne (422) ;
- une unité d'émetteur Tx configurée pour générer un signal émis (432) qui est émis par l'intermédiaire du réseau d'adaptation (420) et de l'antenne (422), le dispositif (100, 400) comprenant une unité de commande d'émetteur Tx (460),
dans lequel l'unité de commande Tx (460) est configurée pour commander l'unité d'émetteur Tx,
dans lequel l'unité de commande Tx (460) est configurée en outre pour détecter l'étiquette externe (110) par :
- l'instruction donnée à l'unité d'émetteur Tx de générer le signal émis (432),
- l'instruction donnée à l'unité d'émetteur Tx de balayer une première valeur de sortie du signal émis (432) grâce à l'augmentation ou la diminution de la première valeur de sortie du signal émis (432) de sorte qu'un changement d'échelon dans une deuxième valeur de sortie du signal émis (432) soit détectable, le changement d'échelon étant causé par le fait que l'étiquette externe (110) recueille suffisamment d'énergie pour permettre à l'étiquette externe (110) de démarrer,
- la surveillance de la deuxième valeur de sortie du signal émis (432), et
- la détection de l'étiquette externe (110) au moment où survient le changement d'échelon dans la deuxième valeur de sortie du signal émis (432) ;
dans lequel la première valeur de sortie du signal émis (432) comprend l'un des éléments suivants :
- une tension du signal émis (432),
- une puissance du signal émis (432),
- un courant du signal émis (432) ;
dans lequel la deuxième valeur de sortie du signal émis (432) comprend l'un des éléments suivants :
- un courant du signal émis (432),
- une tension du signal émis (432),
- une puissance du signal émis (432), et
dans lequel la deuxième valeur de sortie n'est pas la même que la première valeur de sortie.
